# EUROPEAN PATENT APPLICATION

(11) **EP 2 804 381 A1**
(43) Date of publication of application: **19.11.2014**
(21) Application number: 14166989.5
(22) Date of filing: 05.05.2014
(51) Int. Cl.: H04N 13/04, G09G 3/34, G09G 3/00

(54) **Display operable in two-dimensional mode and three-dimensional mode**

(30) Priority: 15.05.2013 TW 102117275
(71) Applicant: BenQ Corporation, Taipei 114 (TW)
(72) Inventor: Lin, Hsin-Nan, 114 Taipei (TW)
(74) Representative: Becker Kurig Straus

(57) **Abstract**

A display (100) includes a backlight source (110), a first switch and a driving circuit (130). The backlight source (110) includes a set of light emitting units (1201 to 120N). The first switch is coupled to the set of light emitting units (1201 to 120N). The driving circuit (130) is coupled to the first switch. The display (100) generates a direct current signal (130) and a pulse width modulation signal (140) according to a two-dimensional mode and a three-dimensional mode respectively. When the display (100) is in the two-dimensional mode, the driving circuit (130) controls the first switch to drive the set of light emitting units (1201 to 120N) according to the direct current signal (300). When the display (100) is in the three-dimensional mode, the driving circuit (130) controls the first switch to drive the set of light emitting units according to the pulse width modulation signal (400).

## Description

### Field of the Invention

The present invention is related to a display and an operating method of a display for operating in a two-dimensional mode and three-dimensional mode according to the pre-characterizing clauses of claims 1 and 10.

### Background of the Invention

Because a liquid crystal display (LCD) or an organic light emitting diode (OLED) display has advantages of thin appearance, low power consumption and low radiation, the liquid crystal display has been widely applied to multimedia players, mobile phones, personal data assistant (PDA), monitors or flat TVs. In addition, since the three-dimensional (3D) image display technique is getting more and more popular, there is large demand for displays with a 3D image displaying function.

When a display of the prior art displays two-dimensional (2D) images, a pulse width modulation (PWM) method is utilized for driving a backlight. However, the PWM method continuously turns on and turns off the backlight, such that a user may feel that images are blinking when viewing the images, thus image quality is decreased. Even though the user may not feel the high speed blinking, eyes of the user may feel tired or get hurt after viewing the blinking images for a while.

### Summary of the Invention

This in mind, the present invention aims at providing a display and an operating method of a display for operating in a two-dimensional mode and a three-dimensional mode.

This is achieved by a display and an operating method of a display according to claims 1 and 10. The dependent claims pertain to corresponding further developments and improvements.

As will be seen more clearly from the detailed description following below, the claimed display includes a backlight source, a first switch and a driving circuit. The backlight source comprises a set of light emitting units. The first switch is coupled to the set of light emitting units. The driving circuit is coupled to the first switch, wherein the display generates a direct current signal and a pulse width modulation signal according to a two-dimensional mode and a three-dimensional mode respectively; the driving circuit controls the first switch to drive the set of light emitting units according to the direct current signal when the display is in the two-dimensional mode, ; and the driving circuit controls the first switch to drive the set of emitting units according to the pulse width modulation signal when the display is in the three-dimensional mode.

As will be seen more clearly from the detailed description following below, the claimed operating method of a display includes the display generating a direct current signal and a pulse width modulation signal according to a two-dimensional mode and a three-dimensional mode respectively; when the display is in the two-dimensional mode, a driving circuit of the display controlling a switch to drive a set of light emitting units of a backlight source according to the direct current signal; and when the display is in the three-dimensional mode, the driving circuit of the display controlling the switch to drive the set of emitting units according to the pulse width modulation signal.

The display of the present invention can solve the blinking problem of the prior art by utilizing the direct current signal in the two-dimensional mode, for further improving image quality. In addition, in the three-dimensional mode when a user is wearing a pair of 3D glasses to watch the display, brightness of the display can be increased for compensating reduction of brightness due to the 3D glasses since the display utilizes the pulse width modulation signal in this mode. Therefore, the user can enjoy better image quality if either watching a two-dimensional movie or a three-dimensional movie on the display.

### Brief Description of the Drawings

In the following, the invention is further illustrated by way of example, taking reference to the accompanying drawings. Thereof
FIG. 1 is a diagram showing a display of the present invention,
FIG. 2 is a flowchart showing operation of the display in FIG. 1 of the present invention,
FIG. 3 is a diagram showing a direct current signal,
FIG. 4 is a diagram showing a current flowing through the light emitting units in a two-dimensional mode,
FIG. 5 is a diagram showing a pulse width modulation signal,
FIG. 6 is a diagram showing a current flowing through the light emitting units in a three-dimensional mode and
FIG. 7 is a diagram illustrating the driving circuit adjusting brightness.

### Detailed Description

The detailed descriptions of the present invention are exemplified below in examples. However, the examples are merely used to illustrate the present invention and not to limit the present invention. Because one skilled in the art may modify the present invention or combine the present invention with some features within the scope of the present invention, the claimed scope of the present invention should be referred to in the claims herein. In the present specification and claims, the term "comprising" is open type and should not be viewed as the term "consisted of." Besides, the term "coupled" can be referring to either directly connecting or indirectly connecting between elements. Thus, if it is described in the below contents of the present invention that a first device is coupled to a second device, the first device can be directly connected to the second device, or indirectly connected to the second device through other devices or means.

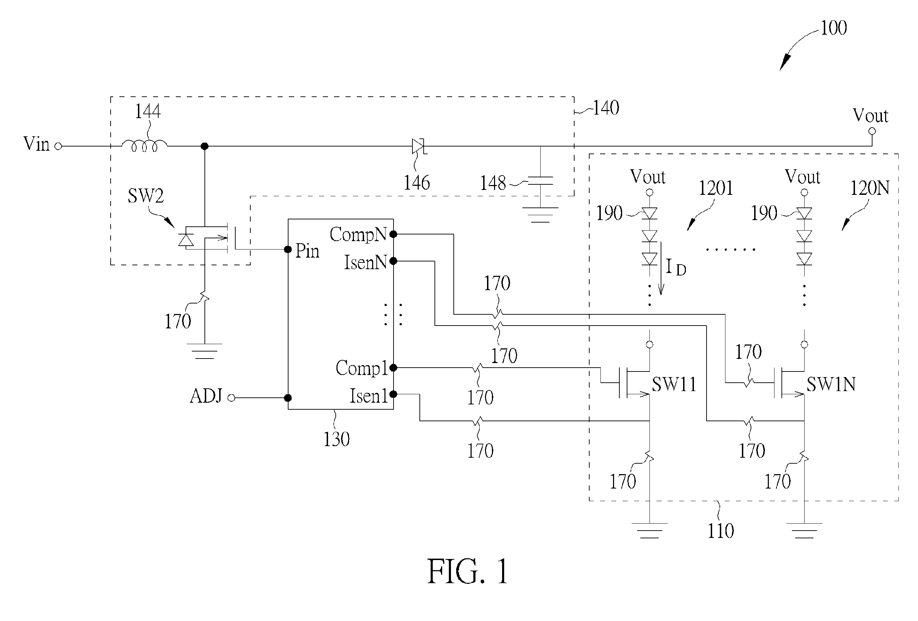

Please refer to FIG. 1. FIG. 1 is a diagram showing a display 100 of the present invention. The display 100 is capable of being operated in a two-dimensional mode and a three-dimensional mode. The display 100 comprises a backlight source 110, N first switches SW11 to SW1N, a driving circuit 130 and a voltage booster 140. The backlight source 110 comprises N sets of light emitting units 1201 to 120N. Each of the first switches SW11 to SW1N is coupled to a corresponding set of light emitting units. The driving circuit 130 comprises a plurality of first terminals Comp1 to CompN, a plurality of second terminals Isen1 to IsenN and a third terminal Pin. The first terminal Comp1 is coupled to the first switch SW11, the first terminal CompN is coupled to the first switch SW1N and so on. The second terminal Isen1 is coupled to the light emitting units 1201 via the first switch SW11, the first terminal IsenN is coupled to the light emitting units 120N via the first switch SW1N and so on. In the present invention, numbers of the sets of the light emitting units and the first switches are not limited. The display can also be arranged to comprise only one set of light emitting units 1201 and one first switch SW11. The first switches SW11 to SW1N can be N-type or P-type metal-oxide semiconductor field effect transistors or other types of switch units.

The voltage booster 140 is coupled to the light emitting units 1201 to 120N for boosting an input voltage Vin, in order to generate a boosted voltage at a power output end Vout and provide to the light emitting units 1201 to 120N. The voltage booster 140 comprises a second switch SW2, an inductor 144, a Zener diode 146 and a capacitor 148. The second switch SW2 is coupled to the third terminal Pin of the driving circuit, for controlling a coupling status between the driving circuit 130 and the voltage booster 140. The inductor 144 is coupled to the second switch SW2, for receiving the input voltage Vin. The Zener diode 146 is coupled to the second switch SW2, the inductor 144 and the power output end Vout, for preventing voltage backflow. The capacitor 148 is coupled to the Zener diode 146, for outputting the output voltage stably. The driving circuit 130 is coupled to a signal input end ADJ, and correspondingly adjusts voltage levels or duty cycles of the first switches SW11 to SW1N according to currents flowing through the N sets of light emitting units 1201 to 120N, in order to adjust the currents flowing through the N sets of light emitting units 1201 to 120N. Each set of the N sets of light emitting units 1201 to 120N comprises a plurality of light emitting diodes 190 connected in series, but also can comprise only one light emitting diode 190. The display 100 can selectively arrange resistors 170 coupled between the driving circuit 130 and the first switches SW11 to SW1N and/or between the driving circuit 130 and the N sets of light emitting units 1201 to 120N.

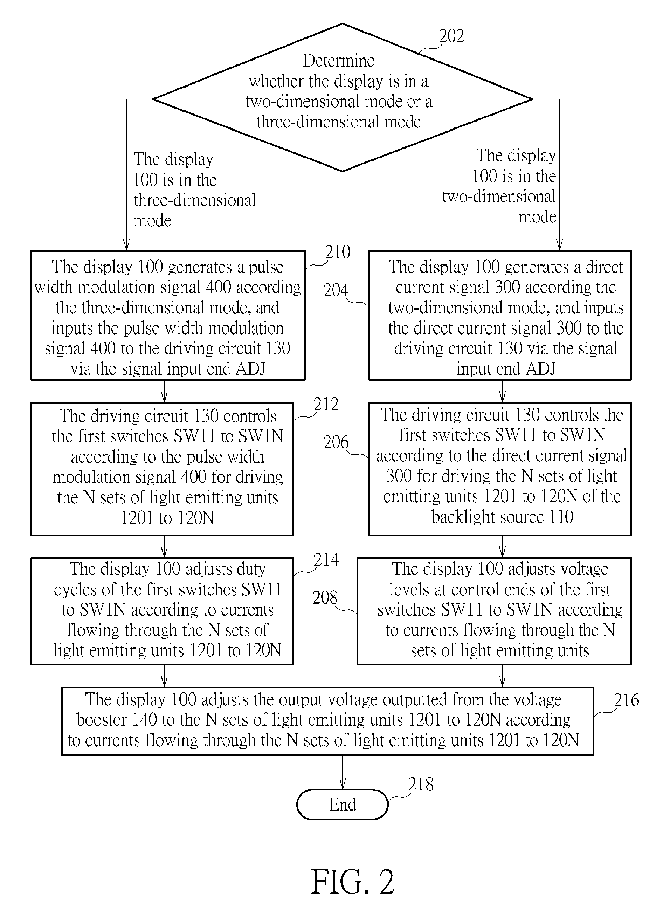

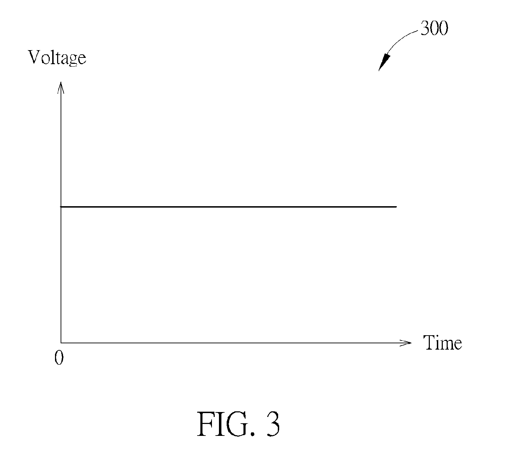

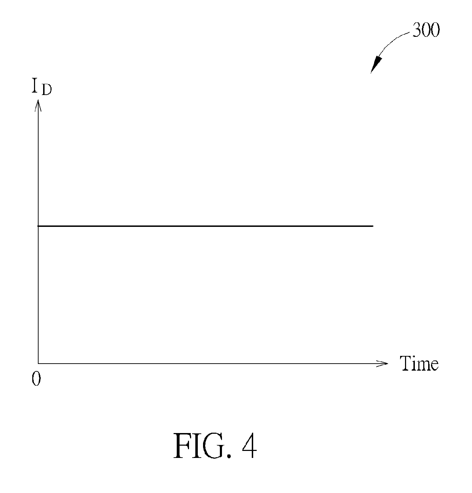

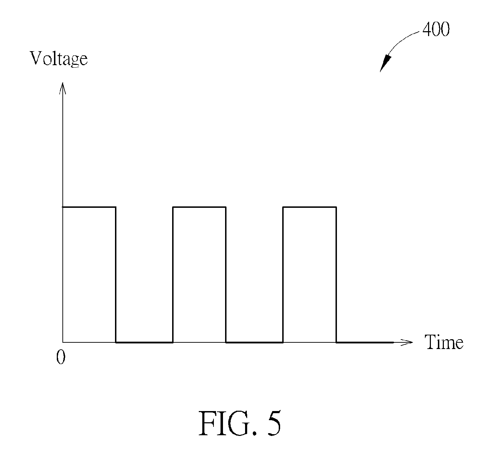

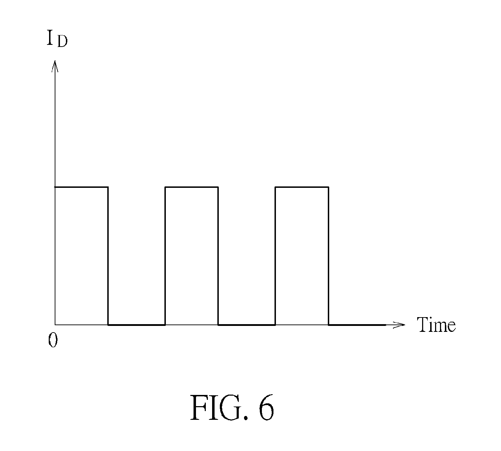

Please refer to FIG. 2 to FIG. 6. FIG. 2 is a flowchart showing operation of the display 100 in FIG. 1 of the present invention. FIG. 3 is a diagram showing a direct current signal 300. FIG. 4 is a diagram showing a current flowing through the light emitting units in a two-dimensional mode. FIG. 5 is a diagram showing a pulse width modulation signal 400. FIG. 6 is a diagram showing a current flowing through the light emitting units in a three-dimensional mode. The flowchart of FIG. 2 comprises the following steps:
Step 202: Determine whether the display is in a two-dimensional mode or a three-dimensional mode; if the display 100 is in the two-dimensional mode, go to step 204; if the display 100 is in the three-dimensional mode, go to step 210;
Step 204: The display 100 generates a direct current signal 300 according the two-dimensional mode, and inputs the direct current signal 300 to the driving circuit 130 via the signal input end ADJ;
Step 206: The driving circuit 130 controls the first switches SW11 to SW1N according to the direct current signal 300 for driving the N sets of light emitting units 1201 to 120N of the backlight source 110;
Step 208: The display 100 adjusts voltage levels at control ends of the first switches SW11 to SW1N according to currents flowing through the N sets of light emitting units, and go to step 216;
Step 210: The display 100 generates a pulse width modulation signal 400 according the three-dimensional mode, and inputs the pulse width modulation signal 400 to the driving circuit 130 via the signal input end ADJ;
Step 212: The driving circuit 130 controls the first switches SW11 to SW1N according to the pulse width modulation signal 400 for driving the N sets of light emitting units 1201 to 120N;
Step 214: The display 100 adjusts duty cycles of the first switches SW11 to SW1N according to currents flowing through the N sets of light emitting units 1201 to 120N;
Step 216: The display 100 adjusts the output voltage outputted from the voltage booster 140 to the N sets of light emitting units 1201 to 120N according to currents flowing through the N sets of light emitting units 1201 to 120N; and
Step 218: End.

In the above embodiment, the display 100 can generate the direct current signal 300 according the two-dimensional mode and generate the pulse width modulation signal 400 according the three-dimensional mode. when the display 100 is in the two-dimensional mode, the driving circuit adjusts voltage levels at the gate ends of the first switches SW11 to SW1N according to the currents flowing through the N sets of light emitting units 1201 to 120N; and when the display is in the three-dimensional mode, the driving circuit 130 adjusts duty cycles of the control ends of the first switches SW11 to SW1N according to the currents flowing through the N sets of light emitting units 1201 to 120N. More particularly, in the two-dimensional mode, the first terminals Comp1 to CompN of the driving circuit 130 can correspondingly adjust voltage levels of the direct current signals 300 inputted to the control ends of the first switches SW11 to SW1N according to sensed current levels of the second terminals Isen1 to IsenN, in order to adjust the voltage levels at the control ends of the first switches SW11 to SW1N, so as to further adjust the currents flowing through the N sets of light emitting units 1201 to 120N; and in the three-dimensional mode, the first terminals Comp1 to CompN of the driving circuit 130 can correspondingly adjust duty cycles of the pulse width modulation signals 400 inputted to the control ends of the first switches SW11 to SW1N according to sensed current levels of the second terminals Isen1 to IsenN, in order to adjust the currents flowing through the N sets of light emitting units 1201 to 120N. In the two-dimensional mode, if the voltage level at the control end of the first switch SW11 to SW1N cannot be correspondingly adjusted to an ideal value by the first terminal Comp1 to CompN, the driving circuit 130 can further adjust a duty cycle of the second switch SW2 via the third terminal Pin, in order to achieve required brightness performance of the display 100. In the three-dimensional mode, if the duty cycle of the first switch SW11 to SW1N cannot be correspondingly adjusted to an ideal value by the first terminal Comp1 to CompN, the driving circuit 130 can further adjust the duty cycle of the second switch SW2 via the third terminal Pin, in order to achieve required brightness performance of the display 100.

The display 100 of the present invention can solve the blinking problem of the prior art by utilizing the direct current signal 300 in the two-dimensional mode, for further improving image quality. In addition, in the three-dimensional mode, when the user is wearing a pair of 3D glasses to watch the display 100, since the display 100 utilizes the pulse width modulation signal 400 then, backlight brightness of the display 100 can be increased for compensating reduction of brightness due to the 3D glasses, such that a crosstalk problem between left eye images and right eye images, which is caused by using the direct current signal to drive the backlight in the three-dimensional mode, can be prevented.

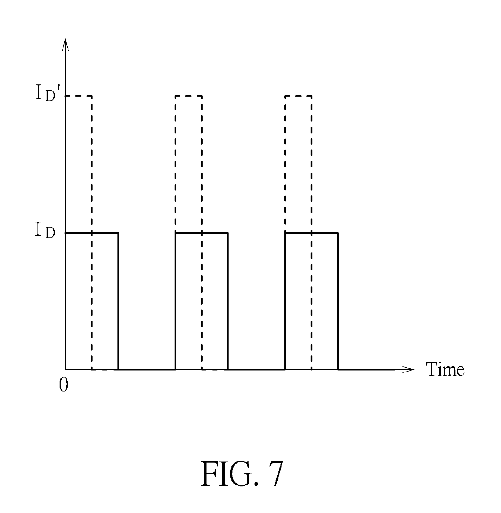

Please refer to FIG. 7. FIG. 7 is a diagram illustrating the driving circuit adjusting brightness. In order to increase brightness, the duty cycles of the control ends of the first switches SW11 to SW1N are increased, but the crosstalk problem may occur in the three-dimensional mode as well. In order to further reduce influence of the crosstalk problem in the three-dimensional mode, when the brightness is increased brightness, the driving circuit 130 can increase the level of the current flowing through the light emitting units from I_{D} to I_{D}' (by increasing the voltage level at the control end of the first switch SW11 to SW1N for example) and reduce the duty cycle of the first switch SW11 to SW1N; or the driving circuit 130 can increase the level of the current flowing through the light emitting units from I_{D} to I_{D}' (by increasing the voltage level at the control end of the first switch SW11 to SW1N for example) and maintain the duty cycle of the first switch SW11 to SW1N. The duty cycle of the control end of the first switch SW11 to SW1N can be controlled from 10% to 40% (25% to 35% is preferred), such that the display 100 has less light leakage in the three-dimensional mode, in order to prevent the crosstalk problem. In addition, an area of the current level I_{D} versus time can be equal to an area of the current level I_{D}' versus time, such that the brightness can be kept the same before and after the current level is changed, but the present invention is not limited by the above.

Summarizing the above, The display 100 of the present invention can thus actively detect image display modes of the display, for further changing ways of outputting voltage, such that the user can enjoy better image quality watching either a two-dimensional movie or a three-dimensional movie on the display.

## Claims

1. A display capable (100) of being operated in a two-dimensional mode and a three-dimensional mode, comprising:
a backlight source (110), comprising a set of light emitting units (1201 to 120N);
a first switch, coupled to the set of light emitting units (1201 to 120N); and
**characterized by**:
a driving circuit (130) coupled to the first switch;
wherein:
the display (100) generates a direct current signal (300) and a pulse width modulation signal (400) according to a two-dimensional mode and a three-dimensional mode respectively;
the driving circuit (130) controls the first switch to drive the set of light emitting units (1201 to 120N) according to the direct current signal (300) when the display (100) is in the two-dimensional mode; and
the driving circuit (130) controls the first switch to drive the set of emitting units (1201 to 120N) according to the pulse width modulation signal (400) when the display (100) is in the three-dimensional mode.

2. The display of claim 1, **characterized in that** the driving circuit (130) is further coupled to the set of light emitting units (1201 to 120N), for adjusting a voltage level at a control end of the first switch according to a current flowing through the set of light emitting units (1201 to 120N) when the display (100) is in the two-dimensional mode, and adjusting a duty cycle of the control end of the first switch according to the current flowing through the set of light emitting units (1201 to 120N) when the display (100) is in the three-dimensional mode.

3. The display of claim 1 or 2 further **characterized by** a voltage booster (140) coupled to the driving circuit (130), for boosting an input voltage into an output voltage, in order to provide the output voltage to the set of light emitting units (1201 to 120N) via the driving circuit (130).

4. The display of claim 3, **characterized in that** the voltage booster (140) comprises:
a second switch coupled to the driving circuit (130);
an inductor (144), coupled to the second switch, for receiving the input voltage;
a Zener diode (146) coupled to the second switch and the inductor (144); and
a capacitor (148), coupled to the Zener diode (146), for outputting the output voltage;
wherein the driving circuit (130) is further configured to adjust a duty cycle of the second switch according to the current flowing through the set of light emitting units (1201 to 120N) in order to adjust a voltage level of the output voltage.

5. The display of claim 1, 2 or 3, **characterized in that** the set of light emitting units (1201 to 120N) comprises a plurality of light emitting diodes (190) connected in series.

6. The display of any of claims 1-5, **characterized in that** when adjusting brightness to the display (100) when it is in the three-dimensional mode, the driving circuit (130) is configured to adjust a current flowing through the set of light emitting units (1201 to 120N), and to adjust a duty cycle of a control end of the first switch.

7. The display of any of claims 1-5, **characterized in that** when adjusting brightness to the display (100) when it is in the three-dimensional mode, the driving circuit (130) is configured to adjust a current flowing through the set of the light emitting units (1201 to 120N), and to maintain a duty cycle of a control end of the first switch.

8. The display of claim 6 or 7, **characterized in that** a duty cycle of a control end of the first switch is between 10% and 40%.

9. The display of claim 6 or 7, **characterized in that** a duty cycle of a control end of the first switch is between 25% and 35%.

10. An operating method of a display, the display (100) being capable of operating in a two-dimensional mode and a three-dimensional mode, the operating method comprising:
**characterized by**:
the display (100) generating a direct current signal (300) and a pulse width modulation signal (400) according to a two-dimensional mode and a three-dimensional mode respectively;
a driving circuit (130) of the display (100) controlling a switch to drive a set of light emitting units (1201 to 120N) of a backlight source (110) according to the direct current signal (300) when the display (100) is in the two-dimensional mode; and
the driving circuit (130) of the display (100) controlling the switch to drive the set of emitting units (1201 to 120N) according to the pulse width modulation signal (400) when the display (100) is in the three-dimensional mode.

11. The operating method of claim 10 further **characterized by**:
adjusting a voltage level at a control end of the switch according to a current flowing through the set of light emitting units (1201 to 120N) when the display (100) is in the two-dimensional mode.

12. The operating method of claim 11 further **characterized by**:
adjusting a duty cycle of the control end of the switch according to the current flowing through the set of light emitting units (1201 to 120N) when the display (100) is in the three-dimensional mode.

13. The operating method of claim 10 further **characterized by**:
adjusting a duty cycle of a control end of the switch according to a current flowing through the set of light emitting units (1201 to 120N) when the display (100) is in the three-dimensional mode.

14. The operating method of claim 10 or 11, **characterized in that** the display (100) further comprises a voltage booster (140), the operating method further comprising the step of controlling the booster (140) to output an output voltage to the set of light emitting units (1201 to 120N) according to the current flowing through the set of light emitting units (1201 to 120N).
